# EUROPEAN PATENT APPLICATION

(11) **EP 4 518 070 A1**
(43) Date of publication of application: **05.03.2025**
(21) Application number: 23194688.0
(22) Date of filing: 31.08.2023
(51) Int. Cl.: H02J 1/12, H02J 1/14, H02M 1/32

(54) **AIRCRAFT POWER CONTROL DEVICE, AIRCRAFT COMPRISING AN AIRCRAFT POWER CONTROL DEVICE, AND METHOD OF CONTROLLING AN AIRCRAFT POWER CONTROL DEVICE**

(71) Applicant: HS Elektronik Systeme GmbH, 86720 Noerdlingen (DE)
(72) Inventor: Gietzold, Thomas, 73485 Unterwilflingen (DE); Michel, Alexander, 73467 Kirchheim a. Ries (DE); Spaeth, Matthias, 91741 Theilenhofen (DE); Gross, David, 73430 Aalen (DE)
(74) Representative: Schmitt-Nilson Schraud Waibel Wohlfrom Patentanwälte Partnerschaft mbB

(57) **Abstract**

An aircraft power control device (10) for controlling electric power in an aircraft (1) comprises: a DC/DC-converter (12) configured for receiving a DC input voltage (Uᵢₙ) on a converter input side, converting the received DC input voltage into a DC output voltage (Uₒᵤₜ), and outputting the DC output voltage (Uₒᵤₜ) on a converter output side; an electric power switch (24) having a switch input side, which is electrically coupled to the converter output side of the DC/DC-converter (12), and a switch output side, the electric power switch (24) being switchable between a switched-on state and a switched-off state, wherein the switch output side is electrically coupled with the switch input side of the electric power switch (24), when the electric power switch (24) is in the switched-on state, and wherein the switch output side is electrically isolated from the switch input side of the electric power switch (24), when the electric power switch (24) is in the switched-off state; and a monitoring device (18), which is electrically coupled between the converter output side of the DC/DC-converter (12) and the switch input side of the electric power switch (24). The monitoring device (18) is configured for monitoring the DC output voltage provided at the converter output side of the DC/DC-converter (12) and instructing the electric power switch (24) to switch into the switched-off state in case a first error condition is met; and/or for monitoring an electric current (I) flowing between the converter output side of the DC/DC-converter (12) and the switch input side of the electric power switch (24) and instructing the electric power switch (24) and/or the DC/DC-converter (12) to switch into the switched-off state in case a second error condition is met.

## Description

The present invention is related to electric power control in an aircraft. The present invention is in particular related to an aircraft power control device, to an aircraft comprising an aircraft power control device, and to a method of controlling an aircraft power control device.

Modern aircraft often comprise at least one aircraft power controller for controlling the supply of electric power from an electric power supply to at least one electric load. The at least one aircraft power controller may in particular be a DC aircraft power controller, which is configured for controlling the supply of DC electric power. The at least one aircraft power controller may comprise at least one solid state switch for selectively switching the supply of electric power from the electric power supply to the at least one electric load.

Modern aircraft may further comprise at least one DC voltage power supply and at least one DC/DC-converter for converting a first DC voltage (input voltage), which is provided by the DC voltage power supply, into a second DC voltage (output voltage), which is to be supplied to the electric loads.

A malfunction of the at least one DC/DC-converter may cause that a too high DC voltage is provided as an output voltage of the DC/DC-converter. A malfunction of a component of the electric system of the aircraft may result in excessively large electric currents flowing in the electric system.

Supplying a too high voltage to the electric loads may damage the electric loads. Excessively large electric currents flowing in the electric system may cause overheating and consequently result in damaging the electric loads and/or other components of the electric system of the aircraft as well.

It therefore would be beneficial to provide an aircraft power control device, in particular a DC aircraft power control device, which allows reliably preventing damaging electric components of the electric system of the aircraft due to overcurrents and/or overvoltages.

Exemplary embodiments of the invention include an aircraft power control device for controlling electric power in an aircraft. The aircraft power control device comprises a DC/DC-converter, which is configured for receiving a DC input voltage on a converter input side, converting the received DC input voltage into a DC output voltage, which differs from the DC input voltage, and outputting the DC output voltage on a converter output side. The aircraft power control device further comprises an electric power switch having a switch input side, which is electrically coupled to the converter output side of the DC/DC-converter, and a switch output side. The electric power switch is switchable between a switched-on state and a switched-off state. When the electric power switch is in the switched-on state, the switch output side is electrically coupled with the switch input side. When the electric power switch is in the switched-off state, the switch output side is electrically isolated from the switch input side.

The aircraft power control device also comprises a monitoring device, which is electrically coupled between the converter output side of the DC/DC-converter and the switch input side of the electric power switch. The monitoring device may be configured for monitoring the DC output voltage provided at the converter output side of the DC/DC-converter and instructing the electric power switch to switch into the switched-off state in case a first error condition is met.

Alternatively or additionally, the monitoring device may be configured for monitoring an electric current flowing between the converter output side of the DC/DC-converter and the switch input side of the electric power switch and instructing the electric power switch to switch into the switched-off state and/or instructing the DC/ DC converter to switch off, in case a second error condition is met.

Exemplary embodiments of the invention further include a method of controlling an aircraft power control device comprising a DC/DC-converter, which is configured for receiving a DC input voltage on a converter input side, converting the DC input voltage into a DC output voltage, which differs from the DC input voltage, and outputting the DC output voltage on a converter output side; an electric power switch having a switch input side, which is electrically coupled to the output side of the DC/DC-converter, and a switch output side, wherein the electric power switch is switchable between a switched-on state and a switched-off state, wherein the switch output side is electrically coupled with the switch input side of the electric power switch, when the electric power switch is in the switched-on state, and wherein the switch output side is electrically isolated from the switch input side of the electric power switch, when the electric power switch is in the switched-off state; and a monitoring device, which is electrically coupled between the converter output side of the DC/DC-converter and the switch input side of the electric power switch, wherein the method comprises: monitoring, with the monitoring device, a DC output voltage provided at the converter output side of the DC/DC-converter and instructing the electric power switch to switch into the switched off state in case the first error condition is met; and/or monitoring, with the monitoring device, an electric current flowing between converter output side of the DC/DC-converter and the switch input side of the electric power switch and instructing the electric power switch to switch into the switched-off state, and/or instructing the DC/DC converter to switch off, in case the second error condition is met.

An aircraft power control device according to an exemplary embodiment of the invention and a method of controlling such an aircraft power control device according to an exemplary embodiment of the invention interrupt the supply of electric DC power to electric loads, which are electrically coupled to the aircraft power control device, in case at least one error condition, such as an overcurrent or an overvoltage, is detected by the monitoring device.

Interrupting the supply of electric DC power supplied by the aircraft power control device prevents electric loads and other components of the electric system of the aircraft, which are supplied with electric power by the aircraft power control device, from being damaged or destroyed by the adverse effects of malfunctions, such as overvoltages and/or overcurrents.

According to exemplary embodiments of the invention, the monitoring device is coupled to the DC/DC-converter as well as to the electric power switch, and the monitoring device is capable to instruct both, the DC/DC-converter and the electric power switch, to switch-off for interrupting the supply of electric power from the DC/DC-converter to electric loads, which are electrically coupled to the aircraft power control device.

Being able to switch off the DC/DC-converter as well as to switch the electric power switch into the switched-off state provides a dissimilar redundancy or, in other words, a "second safety net", which allows interrupting the supply of electric power to the electric consumers even in case one of the DC/DC-converter and the electric power switch should fail in interrupting the supply of electric power. As a result, an aircraft power control device according to an exemplary embodiment of the invention may provide a high level of operational safety.

In addition, an aircraft power control device according to an exemplary embodiment of the inventions uses the DC/DC-converter and the electric power switch, which are already present in the aircraft power control device, for interrupting the supply of electric power in case of an error condition. In consequence, an aircraft power control device according to an exemplary embodiment of the invention may be implemented at relatively low costs, while still meeting redundancy requirements, as specified in aircraft safety code.

Particular embodiments may additionally comprise at least one of the following optional features. Each of these optional features may be provided alone, or in combination with our optional features, unless they are explicitly specified as alternative features.

The first error condition may be met when the DC output voltage provided at the converter output side exceeds a predefined voltage limit.

The second error condition may be met when the electric current flowing between the converter output side and the switch input side of the electric power switch exceeds a predefined current threshold.

Overvoltages and overcurrents are typical errors, which may occur in aircraft electric power supply systems. Thus, detecting the occurrence of overvoltages and overcurrents in an aircraft electric power supply system, and shutting off the aircraft electric power supply system in case an overvoltage and/or an overcurrent have been detected, considerably enhances the safety of the aircraft electric power supply system.

The DC/DC converter of the aircraft power control device may be configured for receiving a DC input voltage in the range of 250 V to 800 V, at its converter input side. The DC input voltage may be airframe referenced or floating. The DC/DC converter may in particular be configured for receiving a DC input voltage of 270 V, a DC input voltage of 540 V, or a DC input voltage of 800 V. DC voltages, which are supplied by a DC aircraft electric power source, are typically in the range of 250 V to 800 V. DC voltages supplied by a DC aircraft electric power source may in particular be 270 V, 540 V, or 800 V.

The DC/DC converter of the aircraft power control device may be configured for providing a DC output voltage in the range of 20 V to 30 V, in particular a DC output voltage of 28 V, at the converter output side. DC voltages in the range of 20 V to 30 V, in particular a DC voltage of 28 V nominal, are often used for operating electric loads in an aircraft.

The predefined current limit, which is used for deciding whether the supply of electric power by the aircraft power control device is to be switched off, may be in the range of between 3 A and 100 A. Depending on the configuration of the electric system of the aircraft, the predefined current limit may in particular be any one of 3A, 5A, 10 A, 16 A, 20 A, 30 A, 40 A, 50 A or 100 A. The predefined current limit may be set so that all electric loads coupled to the aircraft power control device may be safely operated with the electric power, which is supplied by the aircraft power control device, without overloading the aircraft power control device, the electric loads and the electric conduits, which are employed for supplying the electric power from the aircraft power control device to the electric loads.

In order to avoid erroneously interrupting the supply of electric power by the aircraft power control device due to an accidental detection of an overcurrent and/or an overvoltage, detected only for a very short period of time, the monitoring device may be configured for instructing the electric power switch and/or the DC/DC converter to switch off only after the predefined voltage limit and/or the predefined current limit has/have been exceeded for more than a predefined period of time. The predefined period of time ("threshold time") may be in the range of between 3 ms and 5000 ms. Introducing such a threshold time may reduce the risk of erroneously switching off the electric power switch and/or the DC/DC converter due to an accidental detection of an overcurrent and/or an overvoltage. It consequence, the operational reliability of the aircraft power control device and the operational reliability of the electric system of the aircraft may be enhanced.

The monitoring device may be configured for instructing the electric power switch to switch into the switched-off state in case the electric current flowing between the converter output side and the switch input side of the electric power switch exceeds a predefined first current limit. The monitoring device may further be configured for instructing the DC/DC converter to switch off, in case the electric current, which is flowing between the converter output side and the switch input side of the electric power switch exceeds a predefined second current limit.

The predefined second current limit may be set higher than the first current limit. The predefined second current limit may, for example, be set 5 % to 10 % higher than the predefined first current limit.

In such a configuration, only the electric power switch but not the DC/DC-converter is instructed to switch into the switched-off state in case the electric current exceeds the predefined first current limit but not the predefined second current limit. Both the electric power switch and the DC/DC-converter are instructed to switch off in case the predefined first current limit and the predefined second current limit are exceeded.

The monitoring device may also be configured for instructing the electric power switch to switch into the switched-off state in case the electric current flowing between the converter output side and the switch input side of the electric power switch exceeds the predefined first current limit; detecting whether an electric current is still flowing between the converter output side of the DC/DC-converter and the switch input side of the electric power switch after the electric power switch has been instructed to switch into the switched-off state; and instructing the DC/DC converter to switch off, in case an electric current, which is flowing between the converter output side and the switch input side of the electric power switch after the electric power switch has been switched off, exceeds a predefined third current limit.

The predefined third current limit may be set equal to or lower than the predefined first current limit. In such a configuration, the DC/DC converter is instructed to switch off in case the electric power switch has been instructed to switch into the switched-off state because the predefined first current limit has been exceeded, but the electric power switch did not switch off properly so that a current, which exceeds the predefined third current limit, is still flowing despite the electric power switch has been instructed to switch into the switched-off state.

In other words, in this configuration, the monitoring device is configured to monitor whether the electric power switch has been switched off properly by detecting a residual current, which is still flowing between the DC/DC converter and the electric power switch after the electric power switch has been instructed to switch off. The DC/DC converter is instructed to switch off in case the detected residual current, which is flowing between the DC/DC converter and the electric power switch after the electric power switch has been instructed to switch off, is larger than the predefined third current limit, indicating the electric power switch did not switched off properly.

In such an embodiment, the monitoring device instructs the DC/DC converter to switch off in case instructing the electric power switch to switch into the switched-off state did not achieve the desired result of interrupting the flow of electric current between the DC/DC-converter and the electric power switch. Such a situation may occur, for example, due to a malfunction of the electric power switch. Switching off the DC/DC converter, in case instructing the electric power switch to switch into the switched-off state did not achieve the desired result, provides additional redundancy or an additional "line of defense". This enhances the safety of the aircraft power control device and in consequence the safety of the electric system of the aircraft even further.

The aircraft power control device may further comprise at least one control input terminal and it may be configured for selectively activating and deactivating the DC/DC converter and/or the electric power switch based on control inputs received on the at least one control input terminal.

Such a configuration allows using the aircraft power control device not only as a safety device or circuit breaker, which interrupts the supply of electric power in case an overvoltage and/or an overcurrent. Instead, the aircraft power control device may be also employed as a "conventional" electric switch, which may be operated by supplying control inputs to the at the at least one control input terminal. In other words, an aircraft power control device that is equipped with at least one control input terminal may combine the functionalities of a safety device or circuit breaker, which automatically interrupts the supply of electric power in case a malfunction in the electric system, and of an electric switch, which may be selectively switched between the switched-on state and the switched-off state by supplying control commands from an external source to the at least one control input terminal. This may allow reducing the number of components and the costs of the electric system of an aircraft.

The aircraft power control device may comprise at least one DC/DC converter control input terminal. The aircraft power control device may be configured for selectively activating and/or deactivating the DC/DC converter based on an electric power switch control input received at the at least one DC/DC converter control input terminal. The aircraft power control device may in particular comprise a first DC/DC converter control input terminal for activating the DC/DC converter and a second DC/DC converter control input terminal for deactivating the DC/DC converter. Alternatively, the DC/DC converter may be activated and/or deactivated by supplying different control inputs, for example control inputs having different voltages, to a single DC/DC converter control input terminal.

The aircraft power control device may comprise at least one electric power switch control input terminal. The aircraft power control device may be configured for selectively activating and/or deactivating the electric power switch based on an electric power switch control input received at the second control input terminal. The aircraft power control device may in particular comprise a first electric power switch control input terminal for activating the electric power switch and second electric power switch control input terminal for deactivating the electric power switch. Alternatively, the electric power switch may be activated and/or deactivated by supplying different control inputs, for example control inputs having different voltages, to a single electric power switch control input terminal.

The aircraft power control device may also comprise an input control device, which is configured for communicating with an aircraft controller, for example a supervisor controller, for receiving controls signal from said aircraft controller for selectively activating and deactivating the DC/DC converter and/or the electric power switch.

The input control device may communicate with the aircraft controller via a wired connection, or via wireless communication. The input control device may be configured for communicating with the aircraft controller via data lines. These data lines may have the configuration of a data bus, in particular a field bus, for example a CAN bus.

The monitoring device may comprise at least one microprocessor, which is configured for running a program, which, when executed, controls the operation of the monitoring device.

Such a program may include instructions that cause the monitoring device to monitor the DC output voltage provided at the converter output side of the DC/DC-converter and to instruct the electric power switch to switch into the switched-off state in case the DC output voltage provided at the converter output side exceeds a predefined voltage limit.

Alternatively or additionally, the program may include instructions that cause the monitoring device to monitor an electric current flowing between the converter output side of the DC/DC-converter and the switch input side of the electric power switch and to instruct the electric power switch to switch into the switched-off state in case the electric current flowing between the converter output side and the switch input side of the electric power switch exceeds a predefined current limit.

Alternatively or additionally, the program may include instructions that cause the monitoring device to monitor an electric current flowing between converter output side of the DC/DC-converter and the switch input side of the electric power switch and to instruct the DC/DC converter to switch off in case the electric current flowing between the converter output side and the switch input side of the electric power switch exceeds a predefined current limit.

The program may in particular include instructions that cause the monitoring device to instruct the electric power switch to switch into the switched off state in case the electric current flowing between the converter output side and the switch input side of the electric power switch exceeds a predefined first current limit; and to instruct the DC/DC converter to switch off in case the electric current, which is flowing between the converter output side and the switch input side of the electric power switch , exceeds a predefined second current limit.

The predefined second current limit may be larger than the predefined first current limit. The predefined second current limit may in particular be 5 % to 10 % larger than the predefined first current limit.

The program may further include instructions that cause the monitoring device to instruct the electric power switch to switch into the switched off state in case the electric current flowing between the converter output side and the switch input side of the electric power switch exceeds the predefined first current limit; to detect whether an electric current is still flowing between the converter output side of the DC/DC-converter and the switch input side of the electric power switch after the electric power switch has been instructed to switch into the switched off state; and to instruct the DC/DC converter to switch off in case the electric current, which is flowing between the converter output side and the switch input side of the electric power switch after the electric power switch has been switched off, exceeds a predefined third current limit.

Alternatively to providing a microprocessor running such a program, the functionalities of the monitoring device may be implemented in hardware by appropriate electric circuits.

The electric power switch may be provided as an aircraft solid state power controller, in particular as an aircraft solid state power controller that comprises at least one MOSFET. Electric power switches comprising semiconductor switches, such as MOSFETs, are able to reliably switch large electric currents and high electric voltages. Electric power switches comprising semiconductor switches have a long service life and may be produced at comparatively low costs.

The aircraft power control device may be configured for outputting an overvoltage indicator signal in case the DC output voltage provided at the converter output side of the DC/DC-converter exceeds the predefined voltage limit, in order to inform a superior device, such as an supervisor controller, that an overvoltage has been detected.

The aircraft power control device may be configured for outputting an overcurrent indicator signal in case the electric current flowing between the converter output side and the switch input side of the electric power switch exceeds the predefined current limit, in order to inform a superior device, such as an supervisor controller, that an overcurrent has been detected.

In response to receiving an overvoltage indicator signal and/or an overcurrent indicator signal from the aircraft power control device, the superior device may shut down the electric system of the aircraft.

The supervisor controller may also output an alarm signal, for example a visual alarm signal and/or an acoustic alarm signal, which is given to the pilot(s) and/or to maintenance personnel of the aircraft in order to inform them that an overvoltage and/or an overcurrent has been detected. The detection of an overvoltage and/or an overcurrent may also be logged, optionally together with additional information, such as the date and the time at which the alarm signal has been issued, in an appropriate logging device.

Exemplary embodiments of the invention further include an aircraft comprising an aircraft electric power source, in particular a DC aircraft electric power source, and at least one aircraft power control device according to an exemplary embodiment of the invention. In such an aircraft, the converter input side is electrically coupled to the aircraft electric power source for receiving electric power from the aircraft electric power source.

The additional features, modifications and effects described above with respect to an aircraft power control device apply to such an aircraft in an analogous manner.

In the following, an aircraft power control device according to an exemplary embodiments of the invention is described in more detail with reference to the enclosed figures.
Figure 1 depicts a schematic side view of an aircraft comprising an aircraft system including an aircraft power control device according to an exemplary embodiment of the invention.
Figure 2 schematically depicts an aircraft power control device according to an exemplary embodiment of the invention.
Figure 3A depicts a flow chart that illustrates a method of voltage monitoring as it may be executed by an aircraft power control device according to an exemplary embodiment of the invention.
Figure 3B depicts a flow chart that illustrates a first method of current monitoring as it may be executed by an aircraft power control device according to an exemplary embodiment of the invention.
Figure 3C depicts a flow chart that illustrates a second method of current monitoring as it may be executed by an aircraft power control device according to an exemplary embodiment of the invention.

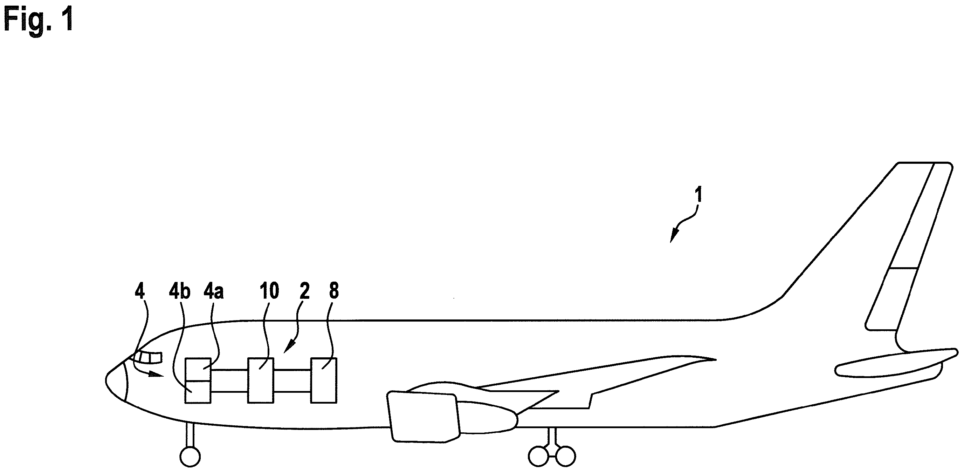

Figure 1 depicts a schematic view of an aircraft 1, in particular of an airplane, which is equipped with an aircraft electric power supply system 2 including an aircraft electric power supply 4, in particular a DC aircraft electric power supply 4, an electric load 8, and an aircraft power control device 10, in particular a DC aircraft power control device 10, according to an exemplary embodiment of the invention. The aircraft power control device 10 is configured for controlling the supply of electric power from the aircraft electric power supply 4 to the electric load 8.

Although the aircraft electric power supply system 2, as it is depicted in Figure 1, includes only a single aircraft electric power supply 4, a single electric load 8, and a single aircraft power control device 10, respectively, embodiments of an aircraft electric power supply system 2 according to the present disclosure may comprise more than one of each of said components, respectively. Typically, an aircraft electric power supply system 2 includes a plurality of electric loads 8 and a plurality of aircraft power control devices 10 assigned to these electric loads 8, respectively.

An aircraft electric power supply system 2 may in particular include a plurality of aircraft power control devices 10, wherein each aircraft power control device 10 includes numerous channels.

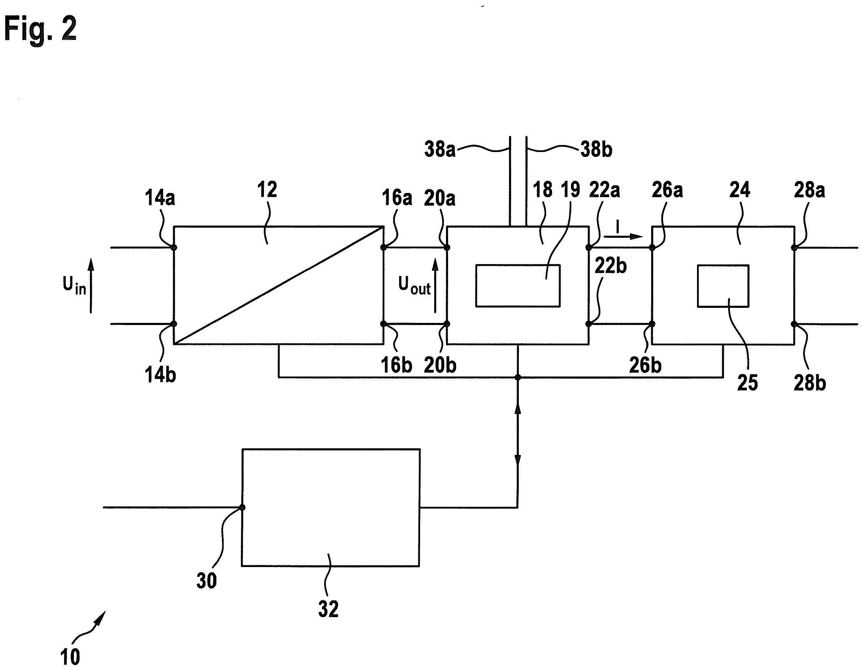

Figure 2 depicts a schematic view of an aircraft power control device 10 according to an exemplary embodiment of the invention.

The aircraft power control device 10 comprises a DC/DC-converter 12 having two electric input terminals 14a, 14b on an input side, and two electric output terminals 16a 16b on an output side. The DC/DC-converter 12 is configured for receiving a DC input voltage on the electric input terminals 14a, 14b on the input side, converting the received DC input voltage into a DC output voltage, which differs from the DC input voltage, and outputting the DC output voltage at the electric output terminals 16a, 16b on the output side.

The DC/DC converter 12 may be configured for receiving a DC input voltage in the range of 250 V to 800 V. The DC/DC converter may in particular be configured for receiving a DC input voltage of 270 V, a DC input voltage of 540 V, or a DC input voltage of 800 V, respectively.

The DC/DC converter 12 may further be configured for providing a DC output voltage in the range of 20 V to 30 V, in particular a DC output voltage of 28 V at the electric output terminals 16a, 16b on the output side.

The electric output terminals 16a, 16b of the DC/DC converter 12 are electrically coupled to input terminals 20a, 20b of a monitoring device 18. The monitoring device 18 further comprises two output terminals 22a, 22b, which are electrically coupled to electric input terminals 26a, 26b of an electric power switch 24, which are provided on a switch input side of the electric power switch 24.

The electric power switch 24 comprises two electric output terminals 28a, 28b, which are provided on a switch output side. The electric output terminals 28a, 28b are electrically coupled to at least one electric load 8, which is not shown in Figure 2.

The electric power switch 24 is switchable between a switched-on state and a switched-off state.

When the electric power switch 24 is switched into the switched-on state, the electric output terminals 28a, 28b on the switch output side of the electric power switch are electrically coupled with the electric input terminals 26a, 26b on the switch input side of the electric power switch 24. In consequence, an electric voltage, which is applied to the electric input terminals 26a, 26b on the switch input side of the electric power switch 24 by the DC/DC converter 12, is also present at the two electric output terminals 28a, 28b on the switch output side, and an electric current I may flow through the monitoring device 18 between the DC/DC converter 12, the electric power switch 24 and an electric load 8, which is electrically coupled to the electric output terminals 28a, 28b of the electric power switch 24.

When the electric power switch 24 is switched into the switched-off state, at least one of the electric output terminals 28a, 28b n on the switch output side is electrically isolated from the corresponding electric input terminal 26a, 26b on the switch input side of the electric power switch 24. In consequence, an electric voltage, which is applied to the electric input terminals 26a, 26b on the switch input side of the electric power switch 24, is not forwarded to the two electric output terminals 28a, 28b on the switch output side, and no electric current I is able to flow through the electric power switch 24 between the DC/DC converter 12, the electric power switch 24 and an electric load 8, which is electrically coupled to the electric output terminals 28a, 28b of the electric power switch 24.

The electric power switch 24 may be an aircraft solid state power controller (SSPC), the electric power switch 24 may in particular comprise at least one MOSFET 25, which is employed as a switching device.

The monitoring device 18, which is electrically coupled between the electric output terminals 16a, 16b of the DC/DC-converter 12 and the electric input terminals 26a, 26b of the electric power switch 24, may be configured for monitoring a DC output voltage Uₒᵤₜ, which is provided at the electric input terminals 26a, 26b of the electric power switch 24. The monitoring device 18 may further be configured for instructing the electric power switch 24 to switch into the switched-off state, in case a first error condition is met.

Said first error condition may, for example be met, in case the DC output voltage Uₒᵤₜ provided at the electric input terminals 26a, 26b of the electric power switch 24 exceeds a predefined voltage limit Uₗᵢₘᵢₜ.

Alternatively or additionally, the monitoring device 18 may be configured for monitoring an electric current I flowing between the converter output side of the DC/DC-converter 12 and the switch input side of the electric power switch 24 and the monitoring device 18 may further be configured for instructing the electric power switch 24 to switch into the switched-off state in case a second error condition is met.

Said second error condition may, for example be met, when the electric current I flowing between the converter output side and the switch input side of the electric power switch 24 exceeds a predefined current threshold Iₗᵢₘᵢₜ.

Alternatively or additionally, the second error condition may be met, in case the electric current I flowing between the converter output side and the switch input side of the electric power switch 24 exceeds the predefined current threshold Iₗᵢₘᵢₜ.

The monitoring device 18 may in particular be configured for: instructing the electric power switch 24 to switch into the switched-off state, if the electric current I flowing between the converter output side and the switch input side of the electric power switch 24 exceeds a predefined first current limit Iₗᵢₘᵢₜ₁; detecting whether an electric current I is still flowing between the converter output side of the DC/DC-converter 12 and the input side of the electric power switch 24 after the electric power switch 24 has been instructed to switch into the switched-off state; and instructing the DC/DC converter 12 to switch off in case the electric current I, which is flowing between the converter output side and the switch input side after the electric power switch 24 has been switched off, exceeds a predefined second current limit Iₗᵢₘᵢₜ₂.

An aircraft power control device 10 according to an exemplary embodiment of the invention reliably protects the components of aircraft electric power supply system 2 against overcurrent and/or overvoltage by shutting off the electric power switch 24 and/or the DC/DC-converter 12 of the aircraft power control device 10 if at least one of an overcurrent or an overvoltage is detected.

Since the monitoring device 18 is able to instruct both the electric power switch 24 and the DC/DC-converter 12 to switch off in case an overcurrent and/or an overvoltage is detected, redundancy is provided. This redundancy and dissimilarity enhances the safety of the aircraft power control device 10 even further.

The predefined current limit Iₗᵢₘᵢₜ and the predefined first current limit Iₗᵢₘᵢₜ₁ may be in the range of between 3 A and 100 A. The predefined current limit Iₗᵢₘᵢₜ and the predefined first current limit Iₗᵢₘᵢₜ₁ may be in particular one of 3A, 5A, 10 A, 16 A, 20 A, 30 A, 40 A, 50 A or 100 A.

The predefined second current limit Iₗᵢₘᵢₜ₂ may be 5 % to 10 % larger than the predefined first current limit Iₗᵢₘᵢₜ₁.

As no electric current I is supposed to flow between the DC/DC-converter 12 and the electric power switch 24 after the electric power switch 24 has been switched off, the predefined third current limit Iₗᵢₘᵢₜ₃ may be set lower than the predefined first current limit Iₗᵢₘᵢₜ₁.

The monitoring device 18 may be configured for outputting an overvoltage indicator signal in case the DC output voltage U provided at the output terminals 16a, 16b of the DC/DC-converter 12 exceeds the predefined voltage limit Uₗᵢₘᵢₜ.

Alternatively or additionally, the monitoring device 18 may be configured for outputting an overcurrent indicator signal, in case the electric current I flowing between the output side of the DC/DC-converter 12 and the input side of the electric power switch 24 exceeds a predefined current limit Iₗᵢₘᵢₜ, Iₗᵢₘᵢₜ₁, Iₗᵢₘᵢₜ₂, Iₗᵢₘᵢₜ₃.

The monitoring device 18 may be equipped with at least one indicator signal output terminal 38a, 38b for outputting the overvoltage indicator signal and/or for outputting the overcurrent indicator signal.

The monitoring device 18 may in particular comprise a first indicator signal output terminal 38a for outputting the overvoltage indicator signal, and a second indicator signal output terminal 38b for outputting the overcurrent indicator signal.

The overvoltage indicator signal and/or the overcurrent indicator signal, which are output by the monitoring device 18, may be supplied to a supervisor controller (not shown in the figures), which may be configured for controlling the aircraft electric power supply system 2. In response to receiving the overvoltage indicator signal and/or the overcurrent indicator signal, the supervisor controller may shut down the aircraft electric power supply 4 and/or other components of the aircraft electric power supply system 2.

The supervisor controller may further cause that an alarm signal, for example a visual alarm signal and/or an acoustic alarm signal, is given to the pilot(s) and/or to maintenance personnel of the aircraft 1.

In an embodiment, the monitoring device 18 may comprise at least one microprocessor 19, which may be configured for running a program controlling the operation of the monitoring device 18.

The program may in particular include instructions that cause the monitoring device 18 to monitor the DC output voltage U provided at the electric output terminals 14a, 14b of the DC/DC-converter 12 and to instruct the electric power switch 24 to switch into the switched-off state in case a first error condition is met, for example in case the DC output voltage U detected at the converter output side exceeds a predefined voltage limit Uₗᵢₘᵢₜ.

Alternatively or additionally, the program may include instructions that cause the monitoring device 18 to monitor an electric current I flowing between converter output side of the DC/DC-converter 12 and the switch input side of the electric power switch 24 and to instruct the electric power switch 24 to switch into the switched-off state and/or to instruct the DC/DC converter 12 to switch off in case a second error condition is met, for example in case the electric current I flowing between the converter output side and the switch input side of the electric power switch 24 exceeds a predefined current limit Iₗᵢₘᵢₜ, Iₗᵢₘᵢₜ₁, Iₗᵢₘᵢₜ₂, Iₗᵢₘᵢₜ₃.

In order to avoid an unintended shut-down of the aircraft power control device 10 by mistakenly switching off the electric power switch 24 and/or the DC/DC converter 12 in response to an accidental detection of a short overcurrent and/or a short overvoltage, the monitoring device 18 may be configured for instructing the electric power switch 24 only after at least one of the first error condition and/or second error condition has been met for more than a predefined period of time Δt, and/or the monitoring device 18 may be configured for instructing the DC/DC converter 12 to switch off only after the second error condition has been met for more than the predefined period of time Δt. The predefined period of time Δt may be in the range of between 3 ms and 5000 ms.

The aircraft power control device 10 may further comprise at least one control input terminal 30, which allows selectively activating and deactivating the DC/DC converter 12 and/or the electric power switch 24 by inputting control inputs via the at the at least one control input terminal 30.

The control input terminal 30 may inlcude an electric input control terminal, which allows selectively activating and deactivating the DC/DC converter 12 and/or the electric power switch 24 by applying a dedicated electric voltage to the electric input control terminal. The aircraft power control device 10 may also comprise multiple electric input control terminals.

The aircraft power control device 10 may for example comprise two DC/DC converter control terminals for selectively activating and deactivating the DC/DC converter 12 by applying a dedicated electric voltage to one of these two DC/DC converter 12 control terminals, respectively.

The aircraft power control device 10 may also comprise two electric power switch control terminals for selectively activating and deactivating the electric power switch 24 by applying a dedicated electric voltage to one of these two electric power switch control terminals, respectively.

The control input terminal 30 may also be coupled to an input control device 32, which may be configured for communicating with an aircraft controller, for example the previously mentioned supervisor controller, for receiving controls signals from said aircraft controller for selectively activating and deactivating the DC/DC converter 12 and/or the electric power switch 24.

The input control device 32 may communicate with the aircraft controller via a wired connection, or via wireless communication. The input control device 32 may communicate with the aircraft controller via a data bus, in particular a field bus, for example via a CAN bus.

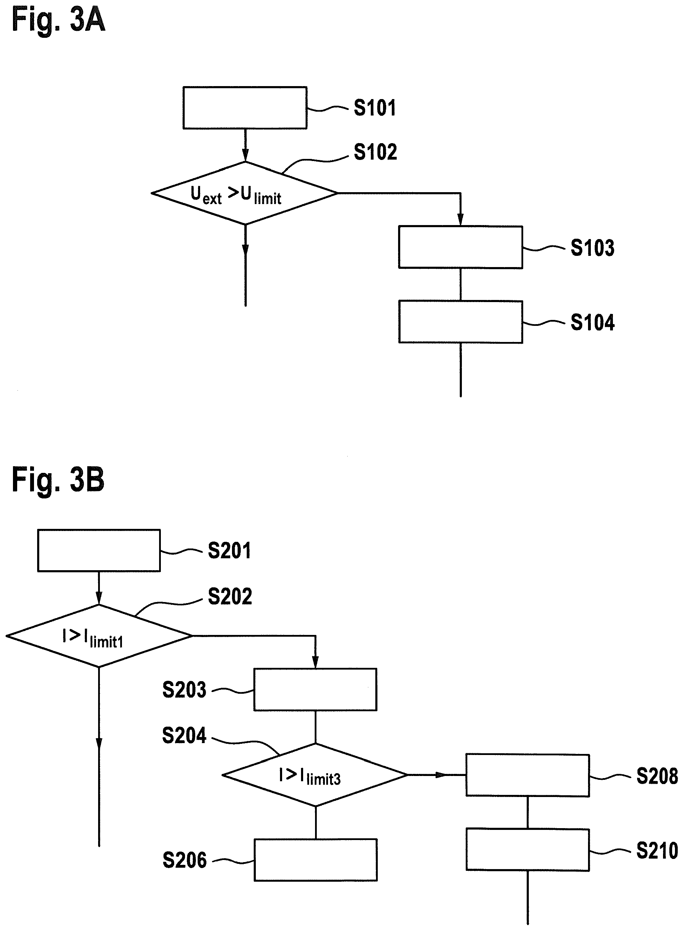

Figures 3A and 3B show exemplary flow charts programs, which may run in the microprocessor 19 for controlling the monitoring device.

Figure 3A depicts a flow chart that illustrates a program that executes a method of voltage monitoring.

First, in step S101, the program instructs the monitoring device 18 to monitor the DC output voltage Uₒᵤₜ provided at the output terminals 16a, 16b on the converter output side of the DC/DC-converter 12.

In a following step S102, the program instructs the monitoring device 18 to compare the DC output voltage Uₒᵤₜ provided at the output terminals 16a, 16b on the output side of the DC/DC-converter 12 with the a predefined voltage limit Uₗᵢₘᵢₜ.

In case the DC output voltage Uₒᵤₜ provided at the converter output side exceeds a predefined voltage limit Uₗᵢₘᵢₜ, the electric power switch 24 is instructed to switch into the switched-off state (step S103).

Further, in step S104, an overvoltage indicator signal indicating that the DC output voltage Uₒᵤₜ provided at the converter output side of the DC/DC-converter 12 exceeds the predefined voltage limit Uₗᵢₘᵢₜ, is output to a superior device.

Figure 3B depicts a flow chart that illustrates a program that executes a first method of current monitoring.

In a first step S201, the program instructs the monitoring device 18 to monitor an electric current I flowing between the converter output side of the DC/DC-converter 12 and the switch input side of the electric power switch 24.

In a following step S202, the program instructs the monitoring device 18 to compare the electric current I flowing between converter output side of the DC/DC-converter 12 and the switch input side of the electric power switch 24 with the a predefined first current limit Iₗᵢₘᵢₜ₁.

If the electric current I flowing between the converter output side and the switch input side of the electric power switch 24 exceeds the predefined first current limit Iₗᵢₘᵢₜ₁, the electric power switch 24 is instructed to switch into the switched-off state in step S203.

In a following step S204, the monitoring device 18 is configured to detect whether an electric current I is still flowing between the converter output side of the DC/DC-converter 12 and the switch input side of the electric power switch 24 after the electric power switch 24 has been instructed to switch into the switched off state.

In case no electric current I is flowing, or the detected electric current I is below a predefined third current limit Iₗᵢₘᵢₜ₃, an overvoltage indicator signal indicating that an overcurrent has occurred, is output to the superior device in step S206.

In case it is detected that an electric current I that is larger than the predefined predefined third current limit Iₗᵢₘᵢₜ₃ is flowing between the converter output side of the DC/DC-converter 12 and the switch input side of the electric power switch 24, the DC/DC converter 12 is instructed to switch off in step S208, and an overvoltage indicator signal indicating that an overcurrent has occurred, is output to the superior device in step S210.

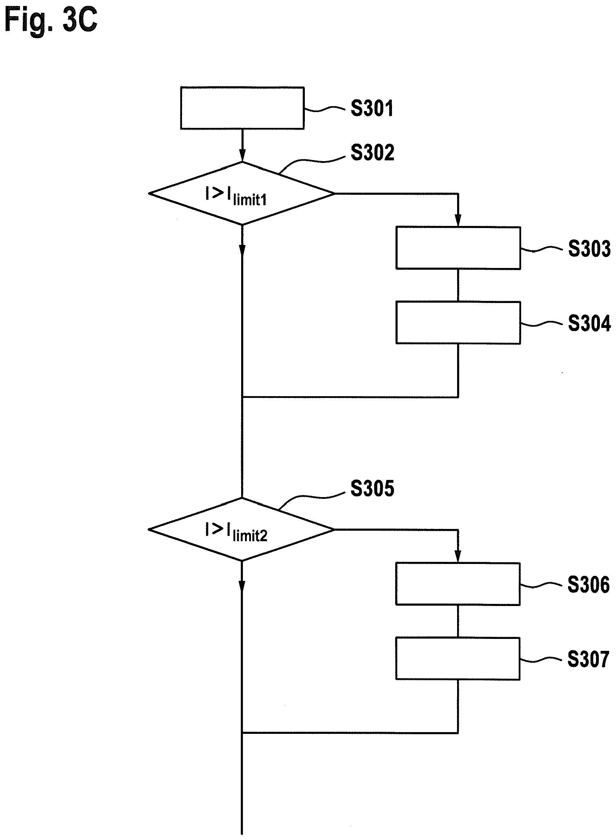

Figure 3C depicts a flow chart that illustrates a program that executes a second method of current monitoring.

In a first step S301, the program instructs the monitoring device 18 to monitor an electric current I flowing between the converter output side of the DC/DC-converter 12 and the switch input side of the electric power switch 24.

In a following step S302, the program instructs the monitoring device 18 to compare the electric current I flowing between converter output side of the DC/DC-converter 12 and the switch input side of the electric power switch 24 with the predefined first current limit Iₗᵢₘᵢₜ₁.

If the electric current I flowing between the converter output side and the switch input side of the electric power switch 24 exceeds the predefined first current limit Iₗᵢₘᵢₜ₁, the electric power switch 24 is instructed to switch into the switched-off state in step S303.

Optionally, an overvoltage indicator signal indicating that an overcurrent that exceeded the predefined first current limit Iₗᵢₘᵢₜ₁, has occurred, may be output to a superior device in step S304.

In step S305, the program instructs the monitoring device 18 to compare the electric current I flowing between converter output side of the DC/DC-converter 12 and the switch input side of the electric power switch 24 with a predefined second current limit Iₗᵢₘᵢₜ₂, which is larger that the predefined first current limit Iₗᵢₘᵢₜ₁.

If the electric current I flowing between the converter output side and the switch input side of the electric power switch 24 exceeds the predefined second current limit Iₗᵢₘᵢₜ₂, the DC/DC-converter is instructed to switch off in step S306.

The predefined second current limit Iₗᵢₘᵢₜ₂ may be 5 % to 10 % larger than the predefined second current limit Iₗᵢₘᵢₜ₂.

Optionally, an overvoltage indicator signal indicating that an overcurrent that exceeded the predefined second current limit I_{limit2,} has occurred, may be output to the superior device in step S307.

While the invention has been described with reference to an exemplary embodiment, it will be understood by those skilled in the art that various changes may be made and equivalents may be substituted for elements thereof without departing from the scope of the invention. In addition, modifications may be made to adapt a particular situation or material to the teachings of the invention without departing from the essential scope thereof. Therefore, it is intended that the invention is not limited to the particular embodiment disclosed, but that the invention will include all embodiments falling within the scope of the appended claims.

## Claims

1. Aircraft power control device (10) for controlling the supply of electric power in an aircraft (1), the aircraft power control device (10) comprising:
a DC/DC-converter (12) configured for receiving a DC input voltage (Uᵢₙ) on a converter input side, converting the received DC input voltage into a DC output voltage (Uₒᵤₜ), and outputting the DC output voltage (Uₒᵤₜ) on a converter output side;
an electric power switch (24) having a switch input side, which is electrically coupled to the converter output side of the DC/DC-converter (12), and a switch output side, the electric power switch (24) being switchable between a switched-on state and a switched-off state, wherein the switch output side is electrically coupled with the switch input side of the electric power switch (24), when the electric power switch (24) is in the switched-on state, and wherein the switch output side is electrically isolated from the switch input side of the electric power switch (24), when the electric power switch (24) is in the switched-off state; and
a monitoring device (18), which is electrically coupled between the converter output side of the DC/DC-converter (12) and the switch input side of the electric power switch (24);
wherein the monitoring device (18) is configured for:
monitoring the DC output voltage provided at the converter output side of the DC/DC-converter (12) and instructing the electric power switch (24) to switch into the switched-off state in case a first error condition is met;
and/or wherein the monitoring device (18) is configured for:
monitoring an electric current (I) flowing between the converter output side of the DC/DC-converter (12) and the switch input side of the electric power switch (24) and instructing the electric power switch (24) and/or the DC/DC-converter (12) to switch into the switched-off state in case a second error condition is met.

2. Aircraft power control device (10) according to claim 1, wherein the monitoring device (18) is configured for instructing the electric power switch (24) and/or the DC/DC-converter (12) to switch into the switched-off state only after the first error condition and/or thesecond error condition have been met for more than a predefined period of time (Δt), wherein the predefined period of time (Δt) is in particular in the range of between 3 ms and 5000 ms.

3. Aircraft power control device (10) according to any of the preceding claims, wherein the DC/DC-converter (12) is configured for receiving a DC input voltage (Uᵢₙ) in the range of 250 V to 800 V on the converter input side, wherein the DC/DC-converter (12) is in particular configured for receiving an input DC (Uᵢₙ) voltage of 270 V, a DC input voltage of 540 V, or a DC input voltage of 800 V; and/or
wherein the DC/DC-converter (12) is configured for providing a DC output voltage (Uₒᵤₜ) in the range of 20 V to 30 V, in particular a DC output voltage (Uₒᵤₜ) of 28 V on the converter output side; and/or
wherein the electric power switch (24) is an aircraft solid state power controller, wherein the aircraft solid state power controller comprises in particular at least one MOSFET (25)..

4. Aircraft power control device (10) according to any of the preceding claims,
wherein the first error condition is met when the DC output voltage provided at the converter output side exceeds a predefined voltage limit (Uₗᵢₘᵢₜ); and/or
wherein the second error condition is met when the electric current (I) flowing between the converter output side and the switch input side of the electric power switch (24) exceeds a predefined current threshold Iₗᵢₘᵢₜ, Iₗᵢₘᵢₜ₁, Iₗᵢₘᵢₜ₂, Iₗᵢₘᵢₜ₃).

5. Aircraft power control device (10) according to claim 4, wherein the monitoring device (18) is configured for:
instructing the electric power switch (24) to switch into the switched-off state in case the electric current (I) flowing between the converter output side and the switch input side of the electric power switch (24) exceeds a predefined first current limit (Iₗᵢₘᵢₜ₁); and
instructing the DC/DC-converter (12) to switch off in case the electric current (I), which is flowing between the converter output side and the switch input side after the electric power switch (24) exceeds a predefined second current limit (Iₗᵢₘᵢₜ₂);
wherein the predefined second current limit (Iₗᵢₘᵢₜ₂) is in particular larger than the predefined first current limit (Iₗᵢₘᵢₜ₁).

6. Aircraft power control device (10) according to claim 4 or 5, wherein the monitoring device (18) is configured for:
instructing the electric power switch (24) to switch into the switched-off state in case the electric current (I) flowing between the converter output side and the switch input side of the electric power switch (24) exceeds a predefined first current limit (Iₗᵢₘᵢₜ₁);
detecting whether an electric current (I) is still flowing between the converter output side of the DC/DC-converter (12) and the switch input side of the electric power switch (24) after the electric power switch (24) has been instructed to switch into the switched-off state; and
instructing the DC/DC-converter (12) to switch off in case the electric current (I), which is flowing between the converter output side and the switch input side after the electric power switch (24) has been switched-off, exceeds a predefined third current limit (Iₗᵢₘᵢₜ₃),
wherein the predefined third current limit (Iₗᵢₘᵢₜ₃) is in particular smaller than the predefined first current limit (Iₗᵢₘᵢₜ₁).

7. Aircraft power control device (10) according to any of claims 4 to 6, wherein the predefined current limit (Iₗᵢₘᵢₜ, Iₗᵢₘᵢₜ₁, Iₗᵢₘᵢₜ₂, Iₗᵢₘᵢₜ₃), in particular the predefined first current limit (Iₗᵢₘᵢₜ₁) and/or the predefined second current limit (Iₗᵢₘᵢₜ₂) is in the range of between 10 A and 100 A, wherein the predefined current limit (Iₗᵢₘᵢₜ, Iₗᵢₘᵢₜ₁, Iₗᵢₘᵢₜ₂, Iₗᵢₘᵢₜ₃) in particular the predefined first current limit (Iₗᵢₘᵢₜ₁) and/or the predefined second current limit (Iₗᵢₘᵢₜ₂), is in particular one of 3A, 5A,10 A, 16 A, 20 A, 30 A, 40 A, 50 A or 100 A.

8. Aircraft power control device (10) according to any of the preceding claims, further comprising at least one control input terminal (30) and configured for selectively activating and deactivating the DC/DC-converter (12) and/or the electric power switch (24) based on control inputs received via the at least one control input terminal (30),
wherein the aircraft power control device (10) comprises in particular at least one DC/DC-converter control input terminal (30) and is configured for selectively activating and/or deactivating the DC/DC-converter (12) based on a DC/ DC-converter (12) control input received on the at least one DC/DC-converter control input terminal (30); and/or
wherein the aircraft power control device (10) comprises in particular at least one electric power switch control input terminal (30) and is configured for selectively activating and/or deactivating the electric power switch (24) based on an electric power switch control input received on the at least one electric power switch (24) control input terminal (30).

9. Aircraft power control device (10) according to any of the preceding claims,
wherein the monitoring device (18) comprises at least one microprocessor (19), which is configured for running a program for controlling the operation of the monitoring device (18), wherein the program in particular includes instructions causing the monitoring device (18)
to monitor a DC output voltage (Uₒᵤₜ) provided at the converter output side of the DC/DC-converter (12) and to instruct the electric power switch (24) to switch into the switched-off state in case the DC output voltage provided at the converter output side exceeds a predefined voltage limit (Uₗᵢₘᵢₜ); and/or
to monitor an electric current (I) flowing between converter output side of the DC/DC-converter (12) and the switch input side of the electric power switch (24) and to instruct the electric power switch (24) to switch into the switched-off state and/or to instruct the DC/DC-converter (12) to switch off in case the electric current (I) flowing between the converter output side and the switch input side of the electric power switch (24) exceeds a predefined current limit (I_{limit,} Iₗᵢₘᵢₜ₁, Iₗᵢₘᵢₜ₂, Iₗᵢₘᵢₜ₃).

10. Aircraft power control device (10) according to any of the preceding claims,
wherein the aircraft power control device (10) is configured for outputting an overvoltage indicator signal in case the DC output voltage (Uₒᵤₜ) provided at the converter output side exceeds the predefined voltage limit (Uₗᵢₘᵢₜ); and/or
wherein the aircraft power control device (10) is configured for outputting an overcurrent indicator signal in case the electric current (I) flowing between the converter output side and the switch input side of the electric power switch (24) exceeds the predefined current limit (I_{limit,} Iₗᵢₘᵢₜ₁, Iₗᵢₘᵢₜ₂, Iₗᵢₘᵢₜ₃).

11. Aircraft (1) comprising an aircraft electric power supply (4) and at least one aircraft power control device (10) according to any of the preceding claims, wherein the converter input side of the DC/DC-converter (12) is electrically coupled to the aircraft electric power supply (4) for receiving electric power from the aircraft electric power supply (4).

12. Method of controlling an aircraft power control device (10), the aircraft power control device (10) comprising:
a DC/DC-converter (12) for receiving a DC input voltage (Uᵢₙ) on a converter input side, converting the DC input voltage into a DC output voltage (Uₒᵤₜ), and outputting the DC output voltage (Uₒᵤₜ) on a converter output side;
an electric power switch (24) having a switch input side of the electric power switch (24), which is electrically coupled to the output side of the DC/DC-converter (12), and a switch output side, wherein the electric power switch (24) is switchable between a switched-on state and a switched-off state, wherein the switch output side is electrically coupled with the switch input side of the electric power switch (24), when the electric power switch (24) is in the switched-on state, and wherein the switch output side is electrically isolated from the switch input side of the electric power switch (24), when the electric power switch (24) is in the switched-off state; and
a monitoring device (18), which is electrically coupled between the converter output side of the DC/DC-converter (12) and the switch input side of the electric power switch (24);
wherein the method includes:
monitoring, with the monitoring device (18), a DC output voltage (Uₒᵤₜ) provided at the converter output side of the DC/DC-converter (12) and instructing the electric power switch (24) to switch into the switched-off state in case a first error condition is met;
and/or wherein the method includes
monitoring, with the monitoring device (18), an electric current (I) flowing between converter output side of the DC/DC-converter (12) and the switch input side of the electric power switch (24) and instructing the electric power switch (24) to switch into the switched-off state and/or instructing the DC/DC-converter (12) to switch off in case a seond error condition is met.

13. Method according to claim 12, wherein the method includes instructing the electric power switch (24) and/or the DC/DC-converter (12) to switch off only after the first error condition and/or the second error condition have been met for more than a predefined period of time, wherein the predefined period of time (Δt) is in particular in the range of between 3 ms and 5000 ms.

14. Method according to claim 12 or 13,
wherein the first error condition is met when the DC output voltage provided at the converter output side exceeds a predefined voltage limit (Uₗᵢₘᵢₜ); and/or
wherein the second error condition is met when the electric current (I) flowing between the converter output side and the switch input side of the electric power switch (24) exceeds a predefined current threshold (Iₗᵢₘᵢₜ, Iₗᵢₘᵢₜ₁, Iₗᵢₘᵢₜ₂, Iₗᵢₘᵢₜ₃).

15. Method according to claim 14,
wherein the method includes:
instructing the electric power switch (24) to switch into the switched-off state in case the electric current (I) flowing between the converter output side and the switch input side of the electric power switch (24) exceeds a predefined first current limit (Iₗᵢₘᵢₜ₁); and
instructing the DC/DC-converter (12) to switch off in case the electric current (I) flowing between the converter output side and the switch input side of the electric power switch (24) after the electric power switch (24) has been instructed to switch off exceeds a predefined second current limit (Iₗᵢₘᵢₜ₂);
wherein the predefined second current limit (Iₗᵢₘᵢₜ₂) is in particular larger than the predefined first current limit (Iₗᵢₘᵢₜ₁); or
wherein the method includes:
instructing the electric power switch (24) to switch into the switched-off state in case the electric current (I) flowing between the converter output side and the switch input side of the electric power switch (24) exceeds a predefined first current limit (Iₗᵢₘᵢₜ₁);
detecting whether an electric current (I) is still flowing between converter output side of the DC/DC-converter (12) and the switch input side of the electric power switch (24) after the electric power switch (24) has been instructed to switch into the switched-off state; and
instructing the DC/DC-converter (12) to switch off in case the electric current (I) flowing between the converter output side and the switch input side of the electric power switch (24) after the electric power switch (24) has been instructed to switch off exceeds a predefined third current limit (Iₗᵢₘᵢₜ₃);
wherein the predefined third current limit (Iₗᵢₘᵢₜ₃₎ is in particular smaller than the predefined first current limit (Iₗᵢₘᵢₜ₁).
